# EUROPEAN PATENT APPLICATION

(11) **EP 4 851 405 A1**
(43) Date of publication of application: **09.12.2026**
(21) Application number: 24922027.8
(22) Date of filing: 13.12.2024
(51) Int. Cl.: E04G 21/12, B65B 13/28

(54) **BINDING SYSTEM AND BINDING PROGRAM**

(30) Priority: 31.01.2024 JP 2024013039
(71) Applicant: MAX CO., LTD., Tokyo 103-8502 (JP)
(72) Inventor: KASAHARA, Akira, Tokyo 103-8502 (JP); NODAGUCHI, Yosei, Tokyo 103-8502 (JP); SHINDO, Shigeki, Tokyo 103-8502 (JP)
(74) Representative: Samson & Partner Patentanwälte mbB
(86) International application number: PCT/JP2024/044258
(87) International publication number: WO 2025/164109

(57) **Abstract**

A shape of reinforcing bars is suitably detected. A binding system (1) for performing binding by using a binding device based on signal information on a plurality of arranged reinforcing bars, includes a second camera (51) that acquires image data of the reinforcing bars (S), and a control unit (77). The control unit (77) detects a shape of the reinforcing bars (S) based on contrast information included in the image data of the reinforcing bars (S).

## Description

### TECHNICAL FIELD

The present invention relates to a binding system and a binding program used for binding reinforcing bars.

### BACKGROUND ART

In the related art, regarding a workpiece in which a plurality of reinforcing bars are combined, a binding system is known that automatically and sequentially binds intersection points of intersecting reinforcing bars with wires. According to this type of binding system, information on binding points as the intersections of the reinforcing bars may be acquired by a sensor or a camera.

For example, the technique described in Patent Literature 1 is applied to a self-propelled binding device that binds while propelling above reinforcing bars assembled on a plane, the technique acquires point group information in an upper-lower direction by using a distance sensor, and linearly models the point group information to detect intersections of the reinforcing bars.

### CITATION LIST

### PATENT LITERATURE

Patent Literature 1: JP2022-110556A

### SUMMARY OF INVENTION

### TECHNICAL PROBLEM

However, according to the technique described in patent literature 1, the detection accuracy of the intersections is low, and it is difficult to grasp a shape of the reinforcing bars such as a reinforcing bar diameter.

The present invention has been made in view of the above circumstances, and an object thereof is to suitably detect a shape of reinforcing bars.

### SOLUTION TO PROBLEM

In order to solve the above problem, the present invention provides a binding system for binding a plurality of arranged reinforcing bars by using a binding device based on signal information on the reinforcing bars, the binding system includes
an information acquisition unit configured to acquire the signal information; and
a detection unit configured to detect a shape of the reinforcing bars based on contrast information included in the signal information.

### ADVANTAGEOUS EFFECTS OF INVENTION

According to the present invention, a contour of a reinforcing bar is extracted based on contrast information included in signal information on the reinforcing bar. Then, a shape of the reinforcing bars such as a diameter can be obtained based on the position of the contour. Therefore, the shape of the reinforcing bars can be detected suitably.

### BRIEF DESCRIPTION OF DRAWINGS

[FIG. 1] FIG. 1 is a perspective view of a device body in a binding system according to an embodiment;
[FIG. 2] FIG. 2 is a block diagram illustrating a schematic control configuration of the binding system according to the embodiment;
[FIG. 3] FIG. 3 is a side view of a binding device according to the embodiment;
[FIG. 4] FIG. 4 is a flow chart illustrating procedures of a binding process according to the embodiment;
[FIG. 5] FIG. 5 is a flow chart illustrating procedures of the binding process according to the embodiment;
[FIG. 6] FIG. 6 is a diagram illustrating an example of image data acquired by a first camera;
[FIG. 7] FIG. 7 is a perspective view of the device body in a state where a workpiece is moved into a binding area;
[FIG. 8A] FIG. 8A is a diagram illustrating an example of image data acquired by a second camera;
[FIG. 8B] FIG. 8B is a diagram illustrating an example of image data obtained by providing height information on reinforcing bars and other positions to the image data in FIG. 8A;
[FIG. 9] FIG. 9 is a diagram for explaining a shape of the reinforcing bars detected based on the image data; and
[FIG. 10] FIG. 10 is a flow chart illustrating procedures according to a modification of the binding process of the embodiment.

### DESCRIPTION OF EMBODIMENTS

Hereinafter, an embodiment of the present invention will be described with reference to the drawings.

### [Configuration of Binding System]

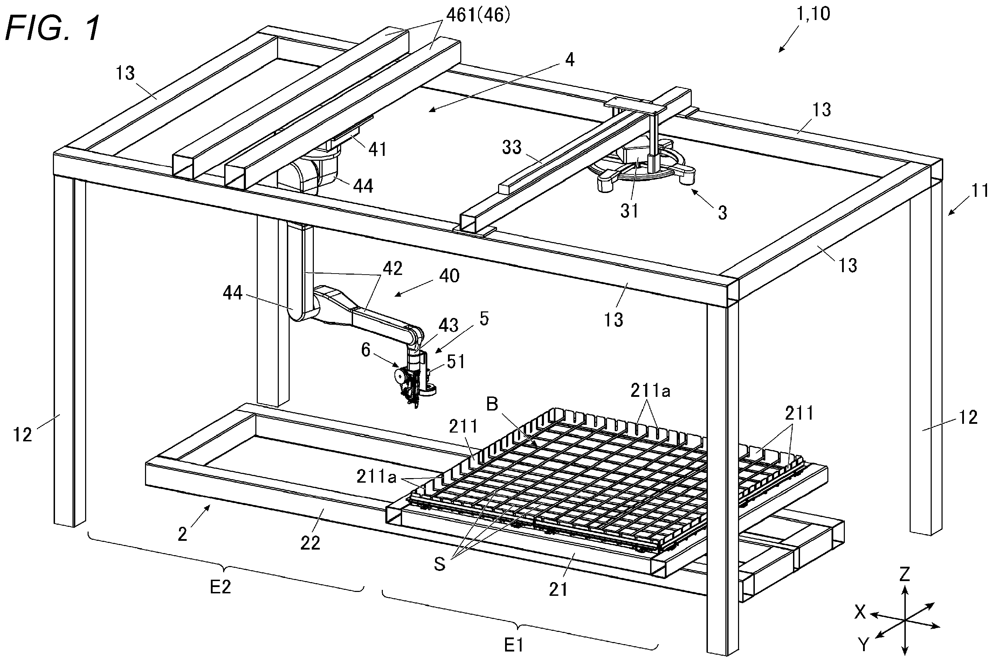

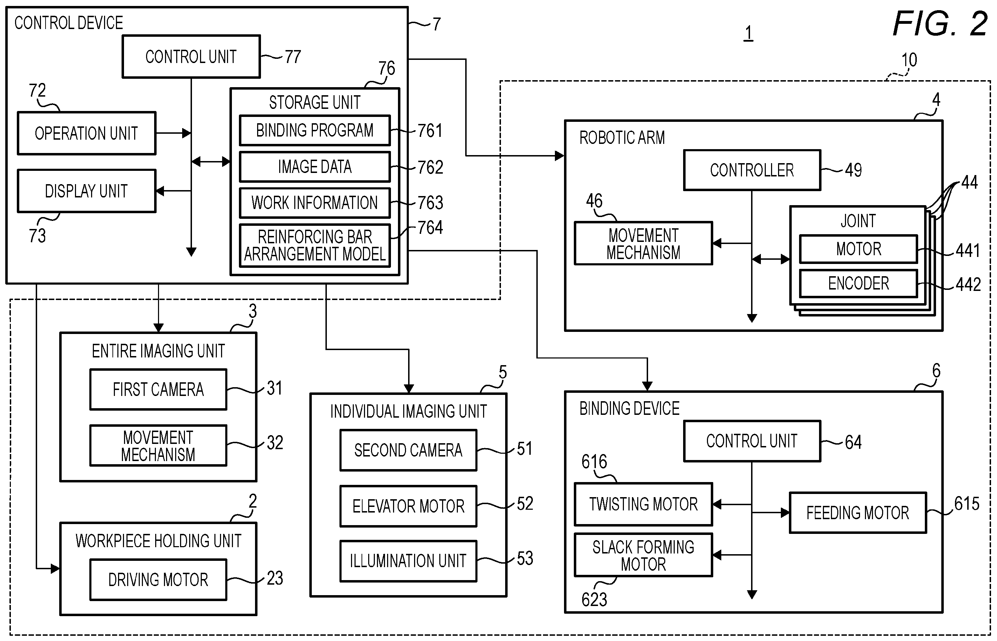

FIG. 1 is a perspective view illustrating a device body 10 included in a binding system 1 according to the present embodiment, and FIG. 2 is a block diagram illustrating a schematic control configuration of the binding system 1.

As illustrated in these drawings, the binding system 1 binds a workpiece B in which a plurality of reinforcing bars S are arranged in a grid pattern, at intersections P at which the plurality of reinforcing bars S intersect.

Specifically, the binding system 1 includes the device body 10 and a control device 7.

The device body 10 includes a workpiece holding unit 2, an entire imaging unit 3, a robotic arm 4, an individual imaging unit 5, and a binding device 6. Of these, the workpiece holding unit 2 is disposed inside a gantry 11 of the device body 10, and the entire imaging unit 3, the robotic arm 4, the individual imaging unit 5, and the binding device 6 are mounted on the gantry 11.

In the following description, X, Y, and Z directions refer to directions illustrated in FIG. 1. The X, Y, and Z directions are orthogonal to each other, an XY plane is a substantially horizontal plane, and the Z direction is a direction substantially along a vertical direction.

The gantry 11 is formed in a rectangular parallelepiped shape elongated in the X direction, and includes four support columns 12 erected at four corners in the X direction and the Y direction, and four beams 13 bridged in the X direction and the Y direction at upper ends of the support columns 12.

In an area inside the gantry 11, a substantially half portion on one side (right side in FIG. 1) in the X direction is an imaging area E1 in which imaging by the entire imaging unit 3 is performed, and a half portion on the other side (left side in FIG. 1) is a binding area E2 in which a binding work by the robotic arm 4 and the binding device 6 is performed.

### <Workpiece Holding Unit>

The workpiece holding unit 2 holds the workpiece B and moves the held workpiece B between the imaging area E1 and the binding area E2. Specifically, the workpiece holding unit 2 includes a holding table 21 that holds the workpiece B, a rail 22 that movably supports the holding table 21, and a driving motor 23 that drives the rail 22.

The holding table 21 is formed in a rectangular plate shape having four sides along the X direction and the Y direction. Support plates 211 that support the plurality of reinforcing bars S constituting the workpiece B are erected on the four sides of the holding table 21. Each of the support plates 211 has a plurality of U-shaped grooves 211a opening upward, and the reinforcing bars S are inserted into the U-shaped grooves 211a. The plurality of reinforcing bars S are arranged in a grid pattern along the X direction and the Y direction in a state where ends of the reinforcing bars S are inserted into the U-shaped grooves 211a of the support plates 211.

The rail 22 is laid along the X direction and guides the holding table 21 in the X direction. The rail 22 according to the present embodiment is laid such that the holding table 21 (workpiece B) is movable at least between the imaging area E1 and the binding area E2. However, the rail 22 may be extended to an outside of the gantry 11, and the workpiece B may be movable to a work process before and after binding.

The driving motor 23 is a driving source that causes the holding table 21 to move. The driving motor 23 causes the holding table 21 to move to the imaging area E1 and the binding area E2 based on a driving command from the control device 7.

The workpiece holding unit 2 only needs to move the holding table 21 (workpiece B) from the imaging area E1 to the binding area E2 at least.

### <Entire Imaging Unit>

The entire imaging unit 3 images the entire workpiece B in the imaging area E1. Specifically, the entire imaging unit 3 includes a first camera 31 disposed above the imaging area E1 and a movement mechanism 32 that movably supports the first camera 31.

The first camera 31 is disposed to face downward, and images the workpiece B held by the workpiece holding unit 2 from above in the imaging area E1. The first camera 31 according to the present embodiment is a compound-eye (for example, four-eye) stereo camera, acquires distance information in a depth direction (upper-lower direction or vertical direction) together with image information (monochrome image) on the XY plane, and outputs the distance information and the image information to the control device 7. The first camera 31 is an example of an information acquisition unit according to the present invention. A sensor type or the like of the first camera 31 is not particularly limited as long as the first camera 31 can acquire the distance information (depth information) together with the image information, and may be a time of flight (TOF) sensor or the like.

The movement mechanism 32 includes a Y direction slider 33 extending along the Y direction. The Y direction slider 33 is bridged over the beams 13 along the X direction and is supported by the beams 13 to be movable in the X direction. The first camera 31 is suspended from the Y direction slider 33 to be movable in the Y direction. The movement mechanism 32 drives a driving source (not illustrated) based on a control command from the control device 7 to cause the first camera 31 to move to a predetermined position (XY coordinates).

As will be described later, the movement mechanism 32 is for imaging the entire workpiece B a plurality of times in order to obtain an image of the workpiece B with a desired resolution. Therefore, depending on the performance of the first camera 31, a shape of the workpiece B, and the like, the movement mechanism 32 may move the first camera 31 only in one of the X and Y directions, or may not be provided.

### <Robotic Arm>

The robotic arm 4 is mounted with the individual imaging unit 5 and the binding device 6, and causes the individual imaging unit 5 and the binding device 6 to move to desired positions in the binding area E2. The robotic arm 4 according to the present embodiment includes a movement mechanism 46, a robotic arm body 40, and a controller 49.

The movement mechanism 46 causes the robotic arm body 40 to move. The movement mechanism 46 according to the present embodiment includes Y direction sliders 461 bridged over the beams 13 of the gantry 11. The Y direction sliders 461 cause the robotic arm body 40 to move in the Y direction.

However, a specific configuration of the movement mechanism 46 is not particularly limited, and may include, for example, a mechanism that causes the robotic arm body 40 to move in the X direction. In addition, when an operation range of the robotic arm body 40 can cover the entire binding area E2 without depending on the movement mechanism 46, the movement mechanism 46 may not be provided.

The robotic arm body 40 is a suspended vertical multi-joint robot, and is installed downward on the Y direction sliders 461 bridged over the beams 13 in the binding area E2.

Specifically, the robotic arm body 40 includes a base 41, a plurality of arms 42, an end effector 43, and a plurality of joints 44.

The robotic arm body 40 is not limited to the vertical multi-joint robot as long as the robotic arm body 40 can move the individual imaging unit 5 and the binding device 6 mounted thereon.

The plurality of arms 42 are coupled in series to each other with the base 41 as a proximal end.

The base 41 is mounted on the Y direction sliders 461 of the movement mechanism 46 and is supported to be movable in the Y direction.

The plurality of joints 44 pivotably couple the base 41, the plurality of arms 42, and the end effector 43. Each joint 44 is provided with a motor 441 that drives the arm 42 (or the end effector 43) coupled to a distal end side of the joint 44, and an encoder 442 that detects a position (speed) of the motor 441 and outputs the position (speed) to the controller 49.

The end effector 43 is coupled to distal ends of the plurality of arms 42. The individual imaging unit 5 and the binding device 6 are mounted on the end effector 43. A specific configuration of the robotic arm body 40 is not particularly limited as long as the individual imaging unit 5 and the binding device 6 are mounted on a distal end of the robotic arm body 40. For example, the individual imaging unit 5 may be fixed to the joint 44 on the most distal end side, and the binding device 6 may be coupled as an end effector via a tool changer.

The controller 49 controls an operation of each part of the robotic arm 4 based on a control command from the control device 7. Specifically, the controller 49 causes each motor 441 and the movement mechanism 46 to operate, and outputs information acquired by each encoder 442 to the control device 7.

The controller 49 may locally control an operation of the mounted individual imaging unit 5 or binding device 6 based on a control command from the control device 7.

### <Individual Imaging Unit>

The individual imaging unit 5 is mounted on the distal end of the robotic arm body 40, and individually images the intersections P of the reinforcing bars S as binding objects in the binding area E2 with a resolution higher than that of the imaging by the entire imaging unit 3. Specifically, the individual imaging unit 5 includes a second camera 51, an elevator motor 52, and an illumination unit 53.

The second camera 51 is attached to the end effector 43 of the robotic arm 4 in a distal end (downward) direction, and images the intersections P of the reinforcing bars S as the binding objects from above. The second camera 51 is provided to be movable in a distal direction (upper-lower direction) relative to the end effector 43. The second camera 51 according to the present embodiment is, for example, an RGB camera, acquires image information (color image) of the intersections P as the binding objects, and outputs the image information to the control device 7. The second camera 51 is an example of the information acquisition unit according to the present invention. A sensor type and the like of the second camera 51 are not particularly limited as long as the second camera 51 can acquire an image (signal information) of at least one intersection P.

The elevator motor 52 is a driving source that causes the second camera 51 to move (lift and lower) in the distal direction (upper-lower direction) relative to the end effector 43.

The illumination unit 53 is disposed slightly in front of the second camera 51 and around an imaging range thereof, and illuminates an imaging object of the second camera 51. The illumination unit 53 according to the present embodiment includes a plurality of light sources (light projectors, not illustrated) capable of illuminating the imaging object of the second camera 51 from different angles.

### <Binding Device>

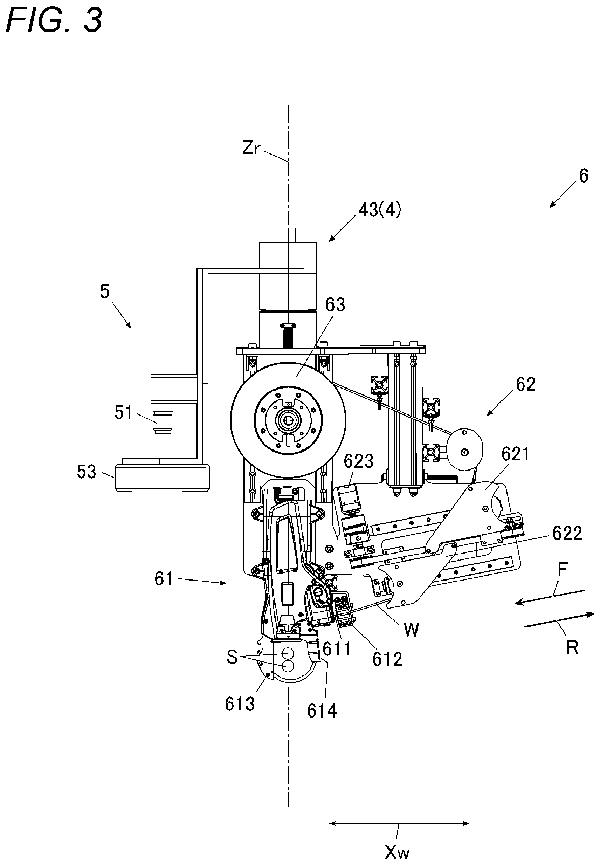

FIG. 3 is a side view of the binding device 6.

As illustrated in FIG. 3, the binding device 6 is mounted on the distal end of the robotic arm body 40. The binding device 6 includes a reinforcing bar binding machine 61 that uses wires W to bind the intersections P of the reinforcing bars S constituting the workpiece B, a slack forming unit 62 that draws the wires W from reels 63 and forms a slack in the wires W between the binding machine 61 and the reels 63, and a control unit 64 (see FIG. 2) that causes a binding operation by the reinforcing bar binding machine 61 and a slack forming operation of the wires W by the slack forming unit 62 to be executed according to an operation command from the control device 7.

The reinforcing bar binding machine 61 includes an entry portion 611 through which the two wires W are fed in from the outside of a case along a feed direction F illustrated in FIG. 3, winds the two wires W fed in from the entry portion 611 around the reinforcing bars S, feeds the two wires W wound around the reinforcing bars S in a reverse feed direction R to wind the wires W on the reinforcing bars S and cut the wires W, and then twists the wires W to bind the reinforcing bars S with the wires W.

Therefore, the binding machine 61 includes a wire feed unit that feeds the wires W, a wire guide 612 that guides the wires W, a curl guide 613 and an inducing guide 614 that wind the wires W around the reinforcing bars S, a cut unit that cuts the wires W wound on the reinforcing bars S, and a binding unit that twists the wires W wound on the reinforcing bars S.

The wire guide 612 is provided in front of the entry portion 611, and guides the two wires W to enter the entry portion 611 along the feed direction F.

The wire feed unit is located inside the entry portion 611, and feeds the two wires W along the feed direction F while sandwiching the two wires W with a pair of feed gears. The wire feed unit includes a feeding motor 615 (see FIG. 2) serving as a driving source. The feeding motor 615 can feed the two wires W toward the feed direction F by forward rotation driving and then wind the wires W around the reinforcing bars S by the curl guide 613 and the inducing guide 614 located in a distal direction of the feeding motor 615. In addition, the feeding motor 615 can feed the two wires W toward the reverse feed direction R by reverse rotation driving and then tighten the reinforcing bars S with the wires W.

The cut unit is located inside the entry portion 611 and on a further inner side relative to the wire feed unit. The cut unit includes a movable blade and a fixed blade (not illustrated), and shares a driving source of the movable blade with the binding unit. The movable blade can move to a fixed blade side by a twisting motor 616 (see FIG. 2) serving as a driving source of the binding unit, to cut the two wires.

The driving source of the cut unit may be separately provided.

The binding device 6 in FIG. 3 is supported by the end effector 43 located at a distal end of the robotic arm 4, and executes the binding operation in a state where a turning axis Zr of the end effector 43 is parallel to the above-described Z direction (vertically upper-lower direction). Further, the binding device 6 is set such that a position at which the wires W are bound on the reinforcing bar S is on an axis of the turning axis Zr, and at the time of the binding, the robotic arm 4 performs positioning of the binding device 6 such that the intersection P of the reinforcing bars S is on the axis of the turning axis Zr.

The curl guide 613 and the inducing guide 614 are located at a distal end (lower end at the time of the binding operation) of the binding machine 61, and are arranged on both sides thereof with the above-described turning axis Zr sandwiched therebetween.

The curl guide 613 is disposed in a position where a proximal end thereof moves from the entry portion 611 toward the feed direction F, and a guide path for causing the wires W to be curled during a process in which the wires W move from the proximal end toward a distal end of the curl guide 613, is formed inside the curl guide 613.

The inducing guide 614 is disposed to face the curl guide 613, and a guide path for receiving the wires W curled by the curl guide 613 from a distal end, and guiding the wires W to a proximal end side while maintaining a curled state, is formed inside the inducing guide 614.

The curl guide 613 and the inducing guide 614 cooperate with each other to deform the wires W into a loop shape, and then wind the wires W around the reinforcing bars S.

The binding unit includes a locking member that locks the wires W in a state where the wires W are wound around the reinforcing bars S between a proximal end of the inducing guide 614 and the proximal end of the curl guide 613. The locking member is supported inside the binding machine 61 to be rotatable about a rotational axis coaxial with the above-described turning axis Zr, and receives a torque for performing rotational driving by the above-described twisting motor 616. The locking member can be subjected to the rotational driving by the above-described twisting motor 616 after the wires W are cut by the cut unit, and can twist both ends of the wires W to bind the reinforcing bars S.

The two reels 63 of the wires W are rotatably supported side by side on one side (upper side at the time of the binding operation) in a direction along the turning axis Zr of the binding machine 61. The two reels 63 are rotatable around a shaft along a direction perpendicular to the page in FIG. 3, and are arranged side by side along the shaft.

The slack forming unit 62 is disposed on one side of an orthogonal direction Xw orthogonal to the turning axis Zr relative to the binding machine 61 and the two reels 63.

The slack forming unit 62 includes a first slack forming unit 621 and a second slack forming unit 622 that respectively perform a crossing operation, and a slack forming motor 623 that serves as a driving source for these crossing operations.

The above-described feed direction F of the wires W is substantially parallel to a plane that is parallel to both the turning axis Zr and the orthogonal direction Xw. Further, an upstream side of the feed direction F of the wires W is inclined slightly toward the upper side of the page in FIG. 3 relative to the orthogonal direction Xw.

Each of the first slack forming unit 621 and the second slack forming unit 622 holds a roller over which the two wires W are stretched.

Further, since the first slack forming unit 621 and the second slack forming unit 622 perform the crossing operation substantially along the feed direction F, a path length for the wires W from the reels 63 to the entry portion 611 of the binding machine 61 is extended, and the wires W are drawn from the reels 63. The first slack forming unit 621 and the second slack forming unit 622 can form a slack corresponding to the drawing from the reels 63 on the wires W by performing a restoration operation after the crossing operation.

The slack forming unit 62 may not be provided.

Incidentally, the two wires W are required to be fed into the entry portion 611 of the binding machine 61 from a direction close to the feed direction F (that is, by an incident angle close to the feed direction F). The feed direction F is a direction suitable for deforming the wires W into the appropriate loop shape by the curl guide 613 and the inducing guide 614 located ahead in an advance direction of the feed direction F.

In order to supply the wires W to the entry portion 611 of the binding machine 61 along the feed direction F, the slack forming unit 62 is disposed such that a path from the second slack forming unit 622 on a downstream side to the entry portion 611 of the binding machine 61 follows the feed direction F. Further, the second slack forming unit 622 performs a separation movement in a direction away from the entry portion 611 of the binding machine 61 along the feed direction F at the time of the crossing operation.

Therefore, the binding device 6 is disposed such that the slack forming unit 62 greatly protrudes on one side (right side of the page in FIG. 3) of the orthogonal direction Xw relative to the binding machine 61 (turning axis Zr).

The second camera 51 and the illumination unit 53 of the individual imaging unit 5 are disposed on the left side of the page in FIG. 3 relative to the binding machine 61 of the binding device 6.

### <Control Device>

As illustrated in FIG. 2, the control device 7 is a computer that integrally controls the binding system 1. Specifically, the control device 7 includes an operation unit 72, a display unit 73, a storage unit 76, and a control unit 77.

The operation unit 72 is an operation unit by which a user performs various operations for operating the control device 7, and includes, for example, a keyboard and a pointing device such as a mouse.

The display unit 73 includes, for example, a liquid crystal display, an organic EL display, or other displays, and displays various information based on a display signal from the control unit 77. The display unit 73 may be a touch panel that also serves as a part of the operation unit 72, or may perform sound output.

The storage unit 76 is a memory constructed by a random access memory (RAM), a read only memory (ROM), or the like, stores various programs and data, and also functions as a work area of the control unit 77.

The storage unit 76 according to the present embodiment stores a binding program 761 for executing a binding process to be described later and a reinforcing bar arrangement model 764 in advance, and also stores image data 762 acquired in the binding process and work information 763.

The image data 762 refers to image information on the workpiece B (reinforcing bars S) acquired by the first camera 31 and the second camera 51 during the execution of the binding process to be described later.

The work information 763 refers to various information on the binding work. Specific contents of the work information 763 will be described later.

The reinforcing bar arrangement model 764 refers to arrangement information on the plurality of reinforcing bars S in the workpiece B serving as a work object, and includes, for example, information on the number of reinforcing bars S arranged in each of the X, Y, and Z directions. In addition, the reinforcing bar arrangement model 764 may also include information on an interval between the reinforcing bars S in each of the X, Y, and Z directions, information on an angle when the reinforcing bars S are inclined, and the like.

The storage unit 76 may store various data other than the above data acquired during the execution of the binding process to be described later, as needed.

The control unit 77 is constructed by, for example, a central processing unit (CPU), and controls an operation of each unit of the control device 7. Specifically, the control unit 77 causes each unit of the control device 7 to operate based on an operation content of the operation unit 72 or the like, loads the programs stored in the storage unit 76 in advance, and executes various processes in cooperation with the loaded programs.

### [Operations of Binding System]

Next, operations of the binding system 1 at the time of executing the binding process for binding the workpiece B will be described.

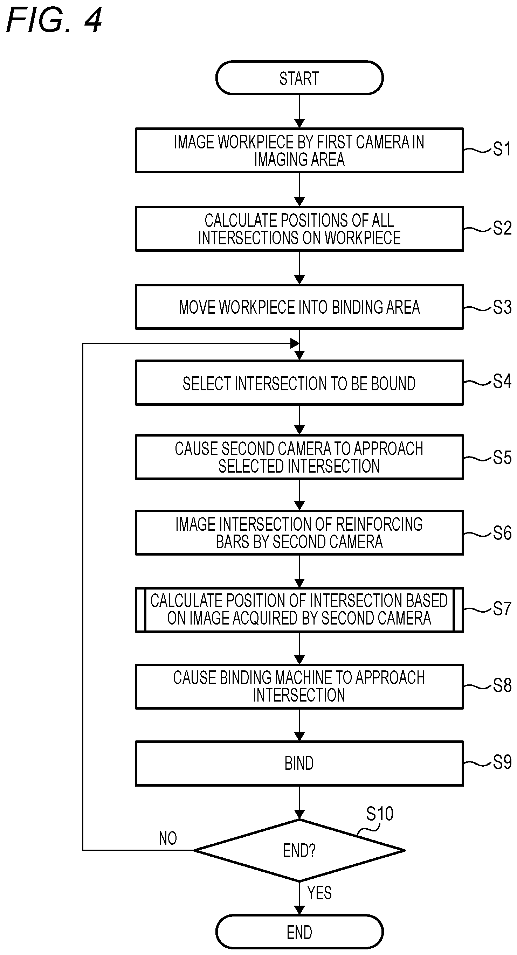

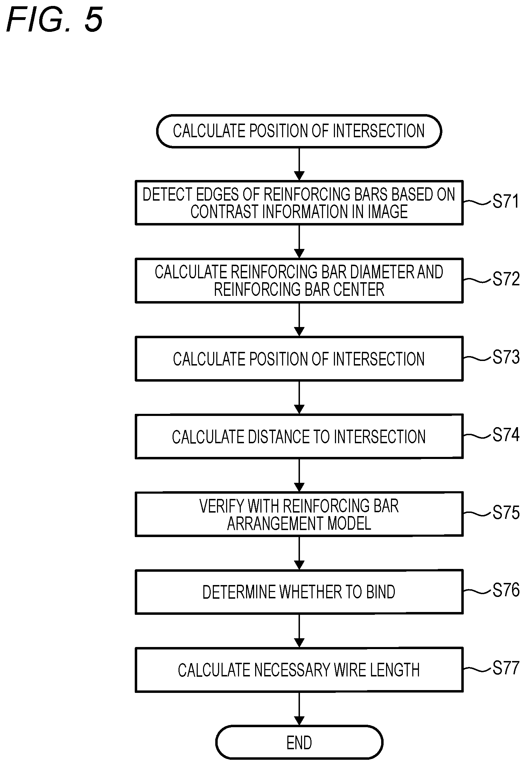

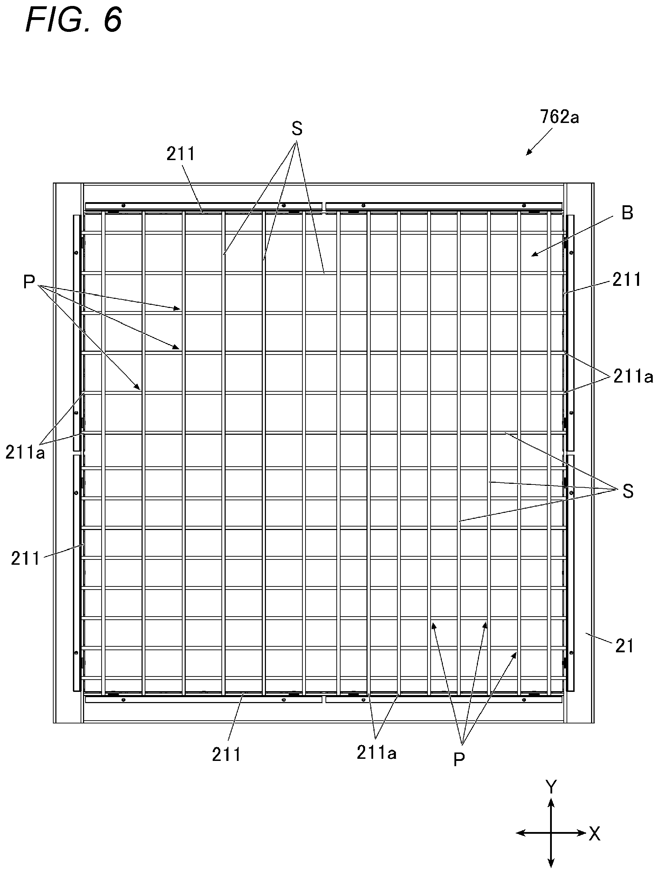

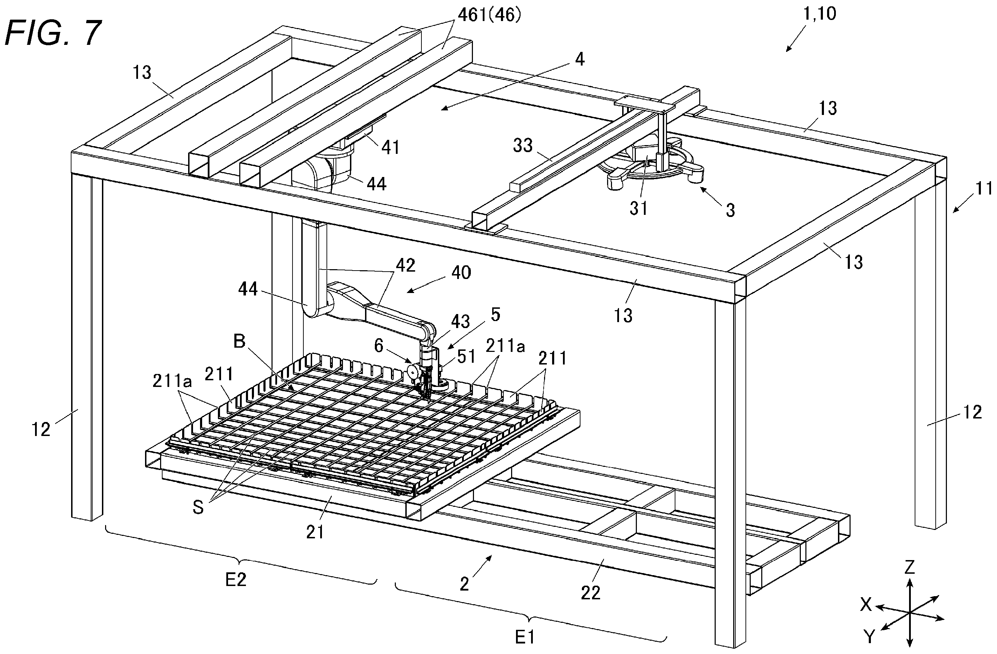

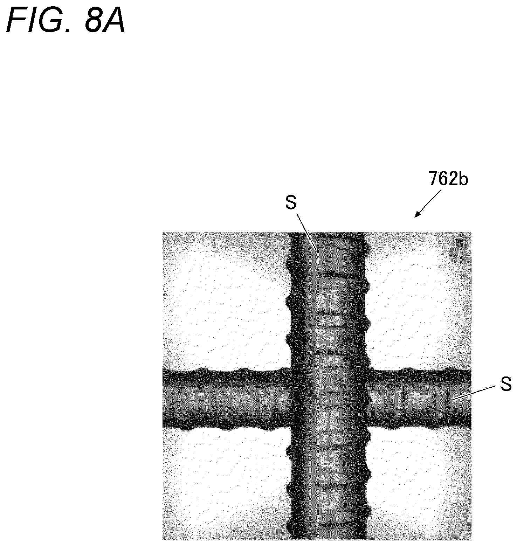

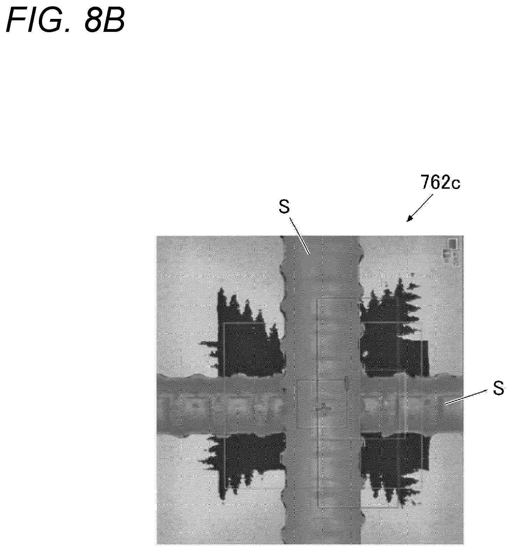

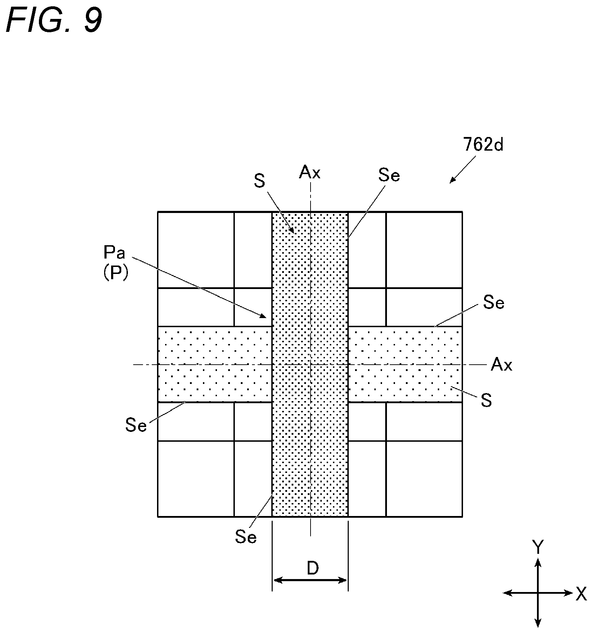

FIGS. 4 and 5 are flow charts each illustrating procedures of the binding process, FIGS. 6 to 9 are diagrams for explaining the binding process, FIG. 6 is a diagram for explaining an example of image data of the workpiece B acquired by the first camera 31, FIG. 7 is a diagram for explaining a perspective view of the device body 10 in a state where the workpiece B is moved into the binding area E2, FIG. 8A is a diagram for explaining an example of image data of a target intersection Pa acquired by the second camera 51, FIG. 8B is a diagram for explaining an example of image data obtained by providing height information on the reinforcing bars S and other positions in FIG. 8A, and FIG. 9 is a diagram for explaining a shape of the reinforcing bars S detected based on the image data.

In the binding process, the plurality of reinforcing bars S arranged in a grid pattern along the X and Y directions are bound at the intersections P (see FIG. 6) where the plurality of reinforcing bars S intersect with one another. This binding process is executed by the control unit 77 of the control device 7 reading out and loading the binding program 761 from the storage unit 76.

Here, it is assumed that the workpiece B is disposed in the imaging area E1 in a state of being placed on the holding table 21 in advance (see FIG. 1).

In the following description, it is assumed that only the control device 7 (the control unit 77 thereof) executes each step, but a control entity of the binding process is not particularly limited. For example, the respective components (control units thereof) of the binding system 1 may execute the binding process, or the control device 7 and the respective components may cooperate to execute the binding process.

As illustrated in FIG. 4, when the binding process is executed, first, the control unit 77 of the control device 7 images the workpiece B by the first camera 31 of the entire imaging unit 3 in the imaging area E1 (Step S1).

Here, regarding the entire workpiece B, the control unit 77 acquires the image data (monochrome image) of the XY plane including the distance information by the first camera 31 as the stereo camera, and stores the image data in the storage unit 76.

More specifically, the control unit 77 controls the movement mechanism 32 to move the first camera 31 into the XY plane in accordance with the size of the workpiece B, an angle of view of the first camera 31, and the like, and images by dividing the entire workpiece B into a plurality of parts (for example, 4 parts of 2 × 2 in the X and Y directions) while partially overlapping a part thereof. Then, the control unit 77 combines a plurality of acquired images to generate an image of the entire workpiece B, and stores the image in the storage unit 76.

Accordingly, for example, image data 762a including the entire workpiece B as illustrated in FIG. 6 is acquired.

In Step S1, it is sufficient to acquire the signal information on the plurality of reinforcing bars S as the binding objects. Here, the "signal information on the plurality of reinforcing bars S" refers to data including at least one of position information on the reinforcing bars S and position information on an obstacle capable of interfering with the binding of the reinforcing bars S. Further, a data format of the signal information is not limited to the image data, and may broadly include electromagnetic data including an optical signal.

Next, the control unit 77 calculates positions of all the intersections P included in the workpiece B based on the image data acquired in Step S1 (Step S2).

Here, the control unit 77 calculates a three-dimensional position information including XYZ coordinates, for each intersection P.

In this step, it is sufficient to calculate positions of a plurality of intersections P among all the intersections P included in the workpiece B.

Here, at the time of calculating the positions of the intersections P, the positions may be calculated by using a reinforcing bar arrangement model 764 (a shape of the intersections of the intersecting reinforcing bars). In this case, when the shape matches the reinforcing bar arrangement model 764, the intersections are regarded as the intersections P, and thus the calculation of the positions becomes easy.

Next, as illustrated in FIG. 7, the control unit 77 drives the driving motor 23 of the workpiece holding unit 2 to operate the holding table 21, and causes the workpiece B to move into the binding area E2 (Step S3).

Next, the control unit 77 selects the intersection P to be bound among the plurality of intersections P included in the workpiece B (Step S4).

Here, the control unit 77 selects one intersection P to be bound next among the plurality of intersections P excluding the intersection P that has already been bound (is recognized as a bound intersection) based on a predetermined binding order, for example.

Hereinafter, the intersection P as the next binding object due to the above selection is referred to as a "target intersection Pa".

Next, the control unit 77 causes the second camera 51 of the individual imaging unit 5 mounted on the robotic arm 4 to approach the target intersection Pa selected in Step S4 in the binding area E2 (Step S5).

Here, the control unit 77 controls the operation of the robotic arm 4 based on the position information on the target intersection Pa calculated in Step S2 and a movement amount in the X direction of the workpiece B moved in Step S3, to move the second camera 51 to a position directly above the target intersection Pa. Then, the control unit 77 controls the operation of the elevator motor 52 to lower the second camera 51 so as to approach the target intersection Pa by a predetermined distance. Accordingly, the target intersection Pa is positioned immediately near the second camera 51 facing downward, for example, a state is achieved where only the target intersection Pa is positioned within the angle of view of the second camera 51 (the intersections P other than the target intersection Pa are positioned outside the angle of view).

Next, the control unit 77 images the target intersection Pa and acquires image data thereof by using the second camera 51 brought close in Step S5 (Step S6).

Here, the control unit 77 acquires the image data (color image) of the target intersection Pa by the second camera 51 and stores the image data in the storage unit 76.

Accordingly, for example, as illustrated in FIG. 8A, image data 762b of the target intersection Pa with a resolution higher than that of the image data acquired by the first camera 31 in Step S1 is acquired.

In this step, it is sufficient to acquire the signal information on at least one intersection P among the plurality of intersections P. More specifically, it is sufficient to acquire the signal information on the intersections P whose number is smaller than that of the plurality of intersections P for which the signal information is acquired by the first camera 31 in Step S1.

In this step, the control unit 77 may control the illumination unit 53 to image the target intersection Pa with different illumination patterns. Accordingly, a three-dimensional image can be generated based on a change in patterns of light and reflected light, and the distance information can be acquired.

Next, the control unit 77 calculates the position of the target intersection Pa based on the image data acquired in Step S6 (Step S7).

In the calculation of the target intersection Pa, as illustrated in FIG. 5, first, the control unit 77 detects edges of the reinforcing bars S as a contour in the image of the reinforcing bars S based on contrast information included in the image data of the reinforcing bars S (step S71). Here, the contour (edges) indicates a boundary between the reinforcing bars S as the target and other parts in a target image.

At this time, the control unit 77 binarizes the image data, and scans from a white side (bright part) to a black side (dark part) (that is, from a weak signal part to a strong signal part) of the image data, thereby detecting the edges. However, the image data may be gray-scaled with a predetermined gradation value instead of being completely binarized.

Specifically, for example, in the case of image data 762d illustrated in FIG. 9, the control unit 77 acquires a contrast value from one side toward the other side of the X direction, for example. Then, a part where the contrast value changes to be larger than a predetermined threshold is detected (extracted) as an edge Se of the reinforcing bar S. Subsequently, the control unit 77 similarly detects an edge Se from the other side toward one side of the X direction. At this time, it is confirmed that these edges Se are both ends of the same reinforcing bar S based on a contrast change difference with the previously detected edge Se. Accordingly, the two edges Se along the Y direction are detected. Similarly, the control unit 77 performs the detection of edge Se along the Y direction, and detects two edges Se along the X direction.

Next, the control unit 77 calculates a reinforcing bar diameter (diameter of the reinforcing bar S) and a reinforcing bar center (center axis along a longitudinal direction of the reinforcing bar S) based on position information on the edges Se (Step S72).

Here, since the reinforcing bar S has a substantially cylindrical shape, the control unit 77 sets a distance between the edges Se as a reinforcing bar diameter D, and sets a line passing through the center of the distance along the two edges Se in the same direction as a reinforcing bar center Ax. Further, it is also possible to acquire a detailed dimension of the reinforcing bar S in a height direction (Z direction).

Next, the control unit 77 calculates the position of the target intersection Pa (Step S73).

Here, the control unit 77 obtains the position (coordinates) of the target intersection Pa as an intersection of the two reinforcing bar centers Ax. Further, dimensions of the target intersection Pa can also be acquired based on the dimensions of the reinforcing bar S in the X and Y directions.

In this way, the position information on the target intersection Pa with higher accuracy than the position information calculated in Step S2 is obtained based on the high-resolution image data acquired by the second camera 51.

Next, the control unit 77 calculates the distance from the second camera 51 to the target intersection Pa of the reinforcing bars S (Step S74).

Here, the control unit 77 acquires height information along the Z direction based on the image data, and obtains the distance between the second camera 51 and the target intersection Pa. Regarding the distance, image data 762c obtained by providing the height information on the reinforcing bars and other positions including the target intersection Pa to the image data 762b in FIG. 8A, is illustrated in FIG. 8B. In this way, based on the obtained height information, the distance by which the binding device 6 can approach the target intersection Pa can be obtained. In addition, a gap amount between the two reinforcing bars S at the target intersection Pa in the Z direction can also be obtained.

Next, the control unit 77 verifies shape information on the reinforcing bars S obtained in the step performed so far with the reinforcing bar arrangement model 764 of the workpiece B (Step S75).

Here, the control unit 77 reads out the reinforcing bar arrangement model 764 of the workpiece B stored in the storage unit 76 in advance, and compares the reinforcing bar arrangement model 764 with the calculated shape information on the reinforcing bars S. Accordingly, the control unit 77 can identify the target intersection Pa as the binding object, and confirm a combination type of the reinforcing bars.

In addition to the above, information on other intersections P acquired in Step S1 and Step S6 may be compared with the information on the target intersection Pa, thereby identifying the target intersection Pa. This indicates that, for example, although the intersection formed by the two reinforcing bars S along the X and Y directions may be erroneously recognized as an intersection P where one thick reinforcing bar S intersects another reinforcing bar S based on the image data, the target intersection Pa is identified by comparing with a result of another intersection P adjacent to the target intersection Pa or another intersection P existing in the same workpiece B, thereby confirming the combination type of the reinforcing bars.

Next, the control unit 77 determines whether to bind the target intersection Pa (Step S76).

Here, the control unit 77 determines whether a main portion (for example, the curl guide 613) of the binding device 6 can be inserted between the two reinforcing bars S from above based on a cross angle of the two reinforcing bars S or the like, and when determining that the main portion can be inserted, the control unit 77 determines to bind the target intersection Pa. Here, when the control unit 77 cannot determine to bind the target intersection Pa, the control unit 77 proceeds to another process including, for example, interruption of the work or output of a warning. Alternatively, the robotic arm 4 and the binding device 6 may be configured to be detachable from each other, a plurality of binding devices 6 having insertion portions (portions to be inserted between the reinforcing bars S) with different sizes may be prepared in advance, and then the binding device 6 corresponding to the target intersection Pa may be selected. That is, in this case, the control unit 77 selects one binding device 6 capable of binding the target intersection Pa as the binding object, among the plurality of binding devices 6. Further, in this case, the plurality of binding devices 6 may be arranged at predetermined positions within a movement range of the robotic arm 4, and the exchange of the binding device 6 by the robotic arm 4 may be automated.

Here, the control unit 77 determines a binding direction based on the position and an orientation of the binding device 6 capable of inserting the main portion between the two reinforcing bars S.

Next, the control unit 77 calculates a wire length necessary for the binding of the target intersection Pa (Step S77).

Here, the control unit 77 calculates the length (including a retracting length) of the wires W necessary for the binding based on the reinforcing bar diameter D and the cross angle of the two reinforcing bars S constituting the target intersection Pa, or the like.

In addition, the control unit 77 may set a rotation amount of the wire feed unit (an operation amount of the feeding motor 615) in the binding (retracting) of the wires W by the binding device 6.

Next, as illustrated in FIG. 4, the control unit 77 causes the binding device 6 to approach the target intersection Pa based on the position information on the target intersection Pa calculated in Step S7 (S73) (Step S8).

Here, the control unit 77 controls the operation of the robotic arm 4, and causes the binding device 6 mounted on the end effector 43 to approach the target intersection Pa instead of the second camera 51. At this time, the control unit 77 can cause the corresponding portion of the binding device 6 to face the target intersection Pa with high positional accuracy based on the position information with higher accuracy on the target intersection Pa obtained in Step S7.

Next, the control unit 77 causes the binding device 6 to operate and bind the target intersection Pa with the wires W (Step S9).

At this time, the binding device 6 is disposed to face the target intersection Pa with sufficiently high positional accuracy, so that it is possible to preferably bind the target intersection Pa.

Further, at this time, the amount of the wires W used to be bound at the target intersection Pa may be calculated and stored in the storage unit 76. The amount of the wires W used may be estimated based on a (substantial) wire feed amount (without including a retraction amount) in the wire feed unit. The wire length necessary for the binding, which is estimated in the above Step S77 before the binding, may be the amount of the wires W used.

Next, the control unit 77 determines whether to end the binding process (Step S10), and when determining not to end the binding process (No in Step S10), the process proceeds to the above Step S4.

Accordingly, the processes in Steps S4 to S10 are repeated until all the necessary intersections P are bound, for example. That is, the selection of the intersection P to be bound next (change of the target intersection Pa), and the imaging and binding of this target intersection Pa are sequentially executed.

Then, for example, when determining to end the binding process due to completion of the binding of all the necessary intersections P in Step S10 (Yes in Step S10), the control unit 77 ends the binding process.

### [Technical Effects of the Present Embodiment]

As described above, according to the present embodiment, the shape of the reinforcing bars S is detected based on the contrast information included in the image data (signal information) of the reinforcing bars S.

Accordingly, the positions of the reinforcing bars S can be grasped based on a contrast change, and the shape information on the reinforcing bars S such as the reinforcing bar diameter D and the reinforcing bar center Ax can be acquired.

Therefore, the shape of the reinforcing bars S can be detected suitably. Further, for example, the optimal binding device 6 can also be selected based on the reinforcing bar diameter D.

According to the present embodiment, the edges (contour) Se of the reinforcing bars S are detected based on the contrast information of the image data.

Therefore, the shape of the reinforcing bars S can be suitably detected based on the image data of reinforcing bars S. However, if the shape of the reinforcing bars S can be detected based on the contrast information, the parts other than the edges Se may be used.

Further, according to the present embodiment, the distance from the second camera 51 to the reinforcing bars S is calculated based on the image data of the reinforcing bars S.

Accordingly, the movement amount of the binding device 6 necessary for the binding work of the reinforcing bars S (target intersection Pa) can be confirmed. As compared with a case of using a 3D sensor or the like, the distance information (height information) can be acquired by a simple process for two-dimensional image data. Further, a gap between the two reinforcing bars S at the target intersection Pa in the height direction can also be confirmed.

According to the present embodiment, the length of the wires W necessary for the binding is calculated (estimated) based on the image data.

Accordingly, for example, shortage of the wires W before the actual binding work can be detected in advance by comparing with a wire remaining amount.

Further, according to the present embodiment, the detection of the edges Se of the reinforcing bars S is performed from the bright part to the dark part (from the weak signal part to the strong signal part) of the image data (signal information) of the reinforcing bars S.

Accordingly, even when the types of the arranged reinforcing bars are different (for example, a difference in thickness or a difference in the number of the arranged reinforcing bars), it is easy to detect the intersections P.

Further, according to the present embodiment, the amount of the wires W used to be bound at the target intersection Pa may be calculated and stored.

Accordingly, the wire remaining amount of the binding device 6 can be grasped.

According to the present embodiment, the image data (signal information) of the reinforcing bars S (target intersection Pa) after the binding may be acquired, and then a bound state may be determined based on the image data. The imaging may be performed by the second camera 51 or the first camera 31.

Specifically, the drawing of the wires W from the edges Se at the target intersection Pa may be detected, and for example, when the wires W are drawn to exceed a predetermined threshold, it may be determined that the bound state of the target intersection Pa is not favorable.

Accordingly, the bound state can be simply determined.

### [Modification]

Although the embodiment of the present invention has been described above, the present invention is not limited to the above embodiment.

For example, according to the above embodiment, the shape of the reinforcing bars S is obtained based on the image data acquired by the second camera 51. However, when the image data of the reinforcing bars S as the objects is used, the image data acquired by the first camera 31 may be used, and also in this case, the binding process (Step S71 to S77) can be executed in substantially the same manner as the above embodiment.

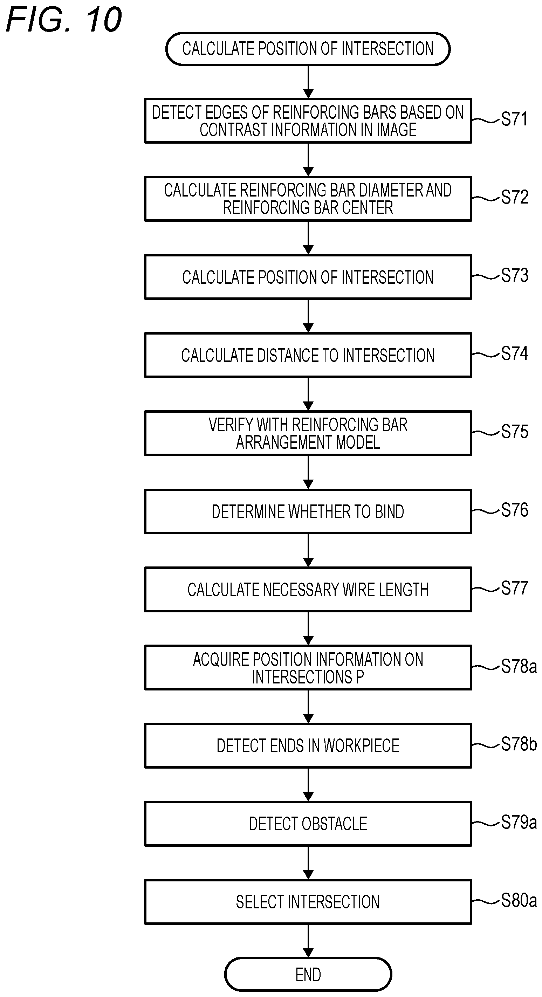

In this case, however, unlike the above embodiment, the plurality of intersections P are included in the image data, and thus mainly based on this matter, the following processes may be further executed after Step S77 as illustrated in FIG. 10. In this case, the processes in Steps S71 to S77 are executed for each intersection P. In the processes in Steps S71 to S77 in this case, the "target intersection Pa" is replaced with the simple "intersections P".

Specifically, after Step S77 is executed, the control unit 77 acquires the position information on the plurality of intersections P (Step S78a), and detects the ends (of the plurality of reinforcing bars S) in the workpiece B based on the position information (Step S78b).

Here, the control unit 77 detects the intersections P positioned at the ends among the plurality of intersections P by determining whether the intersections P are continuous (whether there are adjacent intersections P).

Accordingly, the overall shape and size of the workpiece B can be grasped, and the range of the work object can be determined. Further, a movement path of the robotic arm 4 or the like can be planned, for example.

Next, the control unit 77 detects the obstacle capable of interfering with the binding, based on the image data of the reinforcing bars S (Step S79a).

Here, when one height (Z direction) position is different by a predetermined threshold or more relative to other intersections P based on the height positions of the intersections P, the control unit 77 determines that the obstacle exists in this intersection P.

Accordingly, the work can be continued while avoiding contact with the obstacle by taking measures, for example, moving so as to avoid the obstacle, changing the binding direction so as not to interfere with the obstacle and then performing the binding, or the like.

Next, the control unit 77 selects one intersection P among the plurality of intersections P based on a predetermined selection condition (Step S80a).

Here, based on the selection condition stored in the storage unit 76 in advance, such as the shape of the intersection P capable of being bound or an arrangement pattern of the plurality of intersections P, the control unit 77 selects the intersection most satisfying the selection condition as the preferable intersection P. The selected intersection may be the target intersection Pa.

Accordingly, even when the intersections P as the binding objects have various patterns, the intersections P can be preferably bound.

Here, whether to bind the intersection P may be determined based on the above selection condition. That is, it may be determined that the intersection P not satisfying the selection condition cannot be bound.

Accordingly, it is possible to select in advance the intersection P that is difficult to be bound, and to restrain the occurrence of an error indicating that the binding cannot be performed in the actual work.

When the plurality of intersections P are included in the image data, approximate positions of the intersections P are specified and then compared and determined in the comparison with the reinforcing bar arrangement model 764 in Step S75, and thus a determination time can be shortened. Further, the actual positions of the intersections are easily grasped by comparing with the reinforcing bar arrangement model 764.

### [Other Modification]

According to the above embodiment, the work information on the binding work by the binding device 6 may be stored in the storage unit 76. Here, the "work information" refers to information on the binding work executed in the binding area E2, and includes, for example, the position information (XYZ coordinates), whether to bind the intersection, the binding direction (angle), the number of times of binding, a binding intensity, and a binding order. Further, the "work information" may include work log information such as operation contents of the robotic arm 4 and the binding device 6 in each binding operation.

Accordingly, the work information on the binding work can be recorded as needed, and the work information can be output as appropriate.

According to the above embodiment, it is assumed that the imaging area E1 (first area) and the binding area E2 (second area) are different. However, the imaging area E1 and the binding area E2 may partially overlap with each other, or may be integrated with each other (the same).

Further, it is preferable that the position of the obstacle and setting of an insertion direction (an access path to the intersection P) of the binding device 6 in consideration of the obstacle can be performed depending on the signal information acquired by one of the first camera 31 and the second camera 51.

The data format of the signal information acquired by the first camera 31 and the second camera 51 is not particularly limited, and in the case of the image data, it is preferable that the signal information acquired by one of the first camera 31 and the second camera 51 is a monochrome image, the signal information acquired by the other one thereof is a color image.

Further, it is preferable that the position information on the obstacle can be acquired in any direction among the X, Y, and Z directions. That is, by three-dimensionally grasping the position of the obstacle, the work can be executed without causing the robotic arm 4 to come into contact with the obstacle.

According to the above embodiment, the workpiece holding unit 2 moves the workpiece B in the X direction, but the workpiece holding unit 2 may further move or rotate the workpiece B in another direction. For example, when the workpiece holding unit 2 can rotate the workpiece B around a horizontal shaft to reverse upper and lower surfaces thereof, the workpiece holding unit 2 can suitably cope with a workpiece B including reinforcing bars arranged in upper and lower two layers, or the like.

In addition, as long as the image information according to the present invention is substantial image data including the contrast information on the reinforcing bars as the imaging object, the data type (data format) thereof is not particularly limited.

According to the above embodiment, an example in which the present invention is applied to a robotic arm system using a robotic arm has been described.

However, the present invention can also be suitably applied to binding systems other than the robotic arm system, such as a workpiece conveyance system for conveying a workpiece, a gantry system for moving a device by a gantry, and a self-propelled system for causing an entire apparatus provided with a binding device to self-propel above a workpiece.

Further, the present invention can be more preferably applied to a system in which an entire device is installed (fixed), for example, indoors and causes a workpiece to move, as in the above embodiment. When the structure according to the above embodiment is applied in a case of a moving body such as a self-propelled robot that moves freely, a case of an outdoor work, or the like, there may be problems that risk of collision of the information acquisition unit increases, the acquired signal (camera image) is disturbed due to a collision or the like, the size of the entire device increases, and waterproofing of the information acquisition unit is necessary.

In addition, the details described in the above embodiment can be appropriately changed without departing from the gist of the invention.

The present application is based on Japanese Patent Application No. 2024-013039 filed on January 31, 2024, the contents of which are incorporated herein by reference.

### INDUSTRIAL APPLICABILITY

A binding system and a binding program capable of suitably detecting a shape of reinforcing bars are provided.

### REFERENCE SIGNS LIST

1 binding system
2 workpiece holding unit
3 entire imaging unit
31 first camera (information acquisition unit)
4 robotic arm
40 robotic arm body
5 individual imaging unit
51 second camera (information acquisition unit)
6 binding device
61 reinforcing bar binding machine
611 entry portion
613 curl guide
7 control device
76 storage unit
761 binding program
762 image data (image information)
764 reinforcing bar arrangement model (arrangement information)
77 control unit (detection unit, calculation unit, comparison unit, second comparison unit, selection unit, and determination unit)
E1 imaging area
E2 binding area
B workpiece
S reinforcing bar
Se edge
Ax reinforcing bar center
D reinforcing bar diameter
P intersection
Pa target intersection
W wire

## Claims

1. A binding system for binding a plurality of arranged reinforcing bars by using a binding device based on signal information on the reinforcing bars, comprising:
an information acquisition unit configured to acquire the signal information; and
a detection unit configured to detect a shape of the reinforcing bars based on contrast information included in the signal information.

2. The binding system according to claim 1, wherein
the detection unit detects a contour of the reinforcing bars based on the contrast information.

3. The binding system according to claim 1, wherein
the information acquisition unit calculates a distance to the reinforcing bars based on the signal information.

4. The binding system according to claim 1, further comprising:
a calculation unit configured to calculate a wire length necessary for the binding based on the signal information.

5. The binding system according to claim 1, wherein
the detection unit detects position information on a plurality of intersections of the plurality of reinforcing bars intersecting with each other based on the signal information.

6. The binding system according to claim 1, wherein
the detection unit detects an obstacle capable of interfering with the binding based on the signal information.

7. The binding system according to claim 1, further comprising:
a storage unit configured to store arrangement information on the plurality of reinforcing bars in advance; and
a comparison unit configured to compare the signal information and the arrangement information stored in the storage unit.

8. The binding system according to claim 2, wherein
the detection unit detects the contour of the reinforcing bars from a weak signal part to a strong signal part of the signal information.

9. The binding system according to claim 1, further comprising:
a second comparison unit configured to compare the signal information on a plurality of intersections of the plurality of reinforcing bars intersecting with each other and the signal information on the intersection.

10. The binding system according to claim 1, further comprising:
a plurality of binding devices; and
a selection unit configured to select one binding device for a binding object among the plurality of binding devices.

11. The binding system according to claim 10, wherein
the selection unit determines whether to bind the binding object based on the signal information.

12. The binding system according to claim 1, further comprising:
a binding device configured to bind the reinforcing bars with a wire; and
a storage unit configured to store the amount of the wire used.

13. The binding system according to claim 1, wherein
the information acquisition unit acquires the signal information after the binding, and
the binding system further comprises a determination unit configured to determine a bound state based on the signal information after the binding.

14. A binding program causing a computer, which controls a binding system including an information acquisition unit for acquiring signal information on a plurality of arranged reinforcing bars, to function as
a detection unit that detects a shape of the reinforcing bars based on contrast information included in the signal information.
